Europäisches Patentamt

European Patent Office

Office européen des brevets

(19)

(11) Publication number: **0 039 244**
**B1**

## EUROPEAN PATENT SPECIFICATION

(45) Date of publication of patent specification: **21.11.85**

(51) Int. Cl.⁴: **G 01 F 1/10, G 01 F 15/08**

(21) Application number: **81301889.2**

(22) Date of filing: **29.04.81**

(54) **Flow transducer.**

(30) Priority: **29.04.80 GB 8014023**

(43) Date of publication of application:
**04.11.81 Bulletin 81/44**

(45) Publication of the grant of the patent:
**21.11.85 Bulletin 85/47**

(84) Designated Contracting States:
**DE FR GB IT SE**

(56) References cited:
**DE-A-2 905 304**
**GB-A-1 314 627**
**GB-A-1 434 409**
**US-A-4 012 958**

(73) Proprietor: **Cashmore, Peter Roseby**
**Cherokee Woodhurst Park**
**Oxted Surrey (GB)**

(72) Inventor: **Rivers, Robert Leitch**
**Millbrook Woodhurst Park**
**Oxted Surrey (GB)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

The present invention relates to a method of using flow transducers of the turbine-type for measuring flow rates.

Turbine-type flow meters have been known for a number of years for measuring flow rates of both gases and liquids. Patent US—A—3,605,729 discloses a turbine-type flow meter for measuring air flow. This meter includes a vaned rotatable member arranged in a flow duct so as to rotate at a speed which is a function of the rate of air flow through the duct. The rotation is sensed by means of a light beam passing through apertures in the duct and along a chord of the duct so that the beam is intersected by each vane in turn as the vaned rotatable member rotates. The intersection of the light beam causes a pulse train to be produced in electrical circuitry connected to the light receiving member. This arrangement is satisfactory for air, but because of the apertures in the duct it is not generally suitable for all gases and especially not for liquids which would escape through the apertures.

A turbine-type flow meter as disclosed in Patent GB—A—1,492,374 and its corresponding Patent US—A—4,012,958 and uses the same general arrangement as Patent US—A—3,605,729 but because this flow meter is designed for use with gases or liquids, and particularly liquid fuels, modifications needed to be made.

This turbine-type flow transducer comprises a transparent tube through which liquid to be measured is arranged to pass, a vaned rotor member disposed in the bore of the tube and arranged to rotate at a speed which is a function of the flow rate of the liquid, and a light source and photosensitive device disposed on opposite sides of the tube and positioned with respect to the rotor member such that the vanes of the rotor cyclically vary the intensity of a beam of light passing from the light source to the photosensitivity device. The beam of light is shone through the walls of the tube, and the device makes use of a difference in refractive index between the tube and the liquid so as to form a biconvex lens for focusing the beam on to the light receiver.

A difficulty with a flow meter of the type disclosed in Patent GB—A—1,492,374 is that its output, i.e. the pulse train produced, does not discriminate against the presence of air or vapour bubbles which may be present in the liquid. In other words, the rotor will still rotate even in the presence of an air or vapour bubble and will still produce an output pulse each time a vane of the rotor intersects the light beam.

It is an object of the present invention to provide a method of using a tube-type flow transducer which will reduce the effects of the presence of air or vapour bubbles in the liquid whose flow rate is to be measured.

The present invention is characterised by the material of the transparent tube being chosen to have a refractive index close to or equal to that of the liquid whose flow is to be measured whereby the beam of light will pass across the bore of the transparent tube substantially unrefracted when the liquid is present in the tube and be detected by the photosensitive device.

Features and advantages of the present invention will become apparent from the following description of an embodiment thereof when taken in conjunction with the accompanying drawings, in which:

Figure 1 shows a diagrammatic side view of apparatus for indicating liquid flow rate;

Figures 2A, 2B and 2C show respectively side view, end view, and sectional side view of a part of the apparatus shown in Figure 1;

Figures 3A and 3B show respectively side and end views of one section of another part of the apparatus shown in Figure 1;

Figure 4A and 4B show respectively side and end views of another section of the part of the apparatus shown in Figure 3;

Figure 5 shows the interior of the section shown in Figure 3; and

Figure 6 shows a perspective view, partly in section, of the flow transducer.

Although the flow transducer is of general application, the preferred embodiment to be described has been designed for measuring flow rates of fuel in an internal combustion engine. This is convenient for describing the transducer in detail and is only for illustrative purposes. It is possible to design a flow transducer for other uses where the likelihood of air or vapour bubbles in a liquid is also a problem such as in the field of dispensing alcoholic beverages or measuring milk yields from cows.

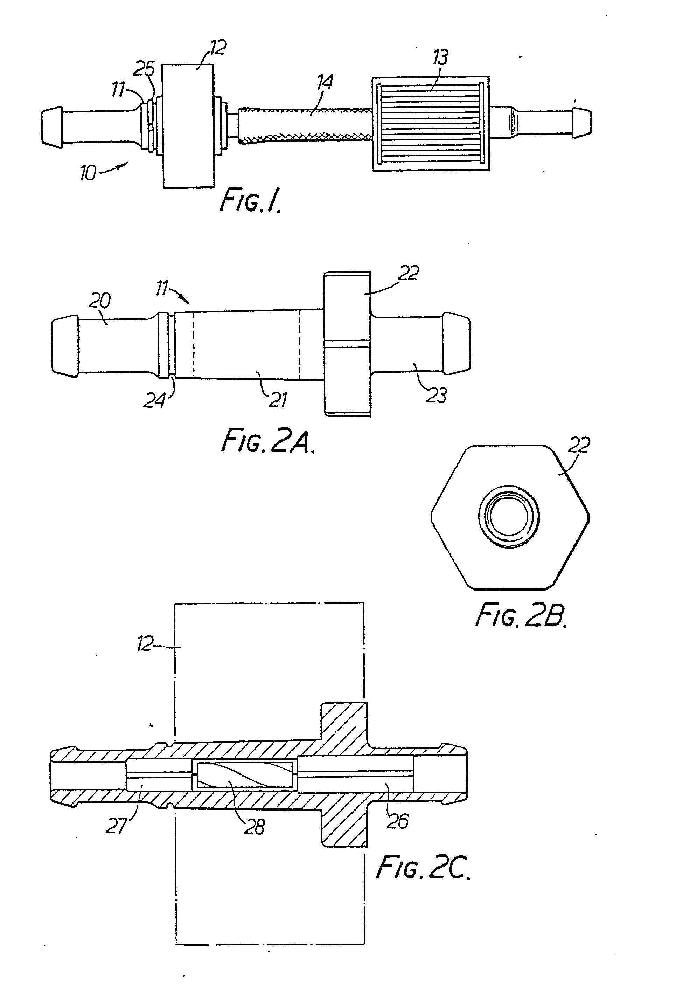

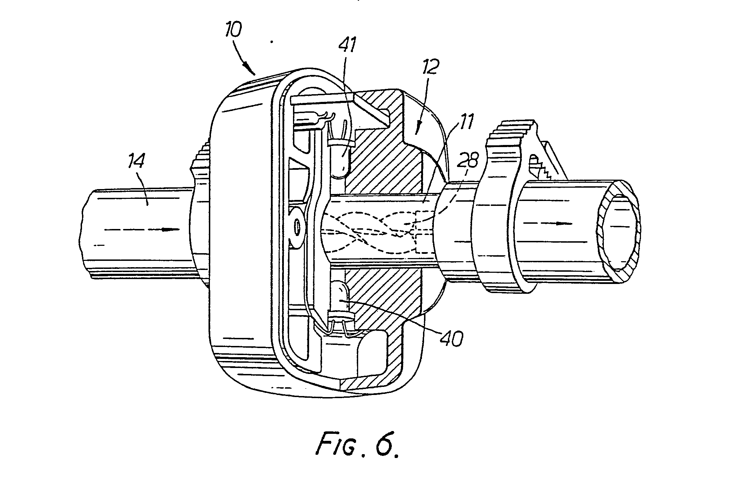

Referring now to the drawings and particularly Figures 1 and 6, a flow transducer 10 comprising a flow tube 11 and detection block 12 are arranged to be connected into the fuel line of an internal combustion engine. Preferably an in-line fuel filter 13 is also provided and the transducer 10 and filter 13 are interconnected a piece of conventional flexible tubing 14 of the type used in fuel lines.

The flow transducer 10 has been specially designed in order that it be inexpensive yet sufficiently accurate for it to be used in conjunction with micro-electronics as a flow meter. The transducer, as mentioned above comprises two main parts, namely, a flow tube 11 and a detection block 12 and the flow tube 11 will now be described in more detail in relation to Figures 2A, 2B and 2C.

The flow tube comprises four sections namely a connecting section 20, a flow measuring section 21, a locating section 22, and a further connecting section 23; the extent of the measuring section 21 is generally indicated by the broken lines in Figure 2A and by the cross-hatched lines in Figure 2C. The connecting sections 20 and 23 are of conventional design and the locating section 22 is shaped to stop the tube 11, rotating about its axis in use when received in a matching recess in the detecting block 12 which is generally indicated by broken lines in Figure 2C. This is achieved in the preferred embodiment by making the locating section of hexagonal external shape, as indicated in Figure 2B. The tube 11 is located against axial movement by means of the locating section 22 abutting a shoulder, not shown in the recess in the detection block 12 and by a circlip being located in the groove 24; the circlip is indicated by the reference numeral 25 in Figure 1.

Within the bore of the flow tube 11 there are provided two flow straightening devices 26, 27 each of which is provided with a pivot member on which a turbine rotor member 28 is freely rotatably mounted so as to rotate when liquid flows in the direction of the arrow in Figure 2C. Each of the flow straightening devices has an equal number of circumferentially spaced longitudinally extending vanes and the turbine rotor member 28 has a number of helical blades different to the number of vanes on each of the flow straightening devices. Further, the number of blades is not an integer multiple of the number of blades on the flow straightener. In this case the number of blades is smaller than the number of vanes e.g. there are four vanes on each flow straightening device but only three blades on the turbine rotor member 28. In this case the flow straightening devices have a cruciform cross-section. The tip and root diameter of the turbine rotor member are chosen having regard to the characteristics of the liquid to be measured the specific gravity of the material used for the rotor member is chosen to be as close as possible to that of the liquid to be measured.

The rotation of the turbine rotor member 28 gives an indication of the rate of flow of the liquid through the tube 11 and the rotation of the member 28 is sensed in any convenient manner. It is preferred in this embodiment to sense the rotation optically and therefore the detection block 12 contains a light source 40 and a light sensitive device 41 operating preferably in the infra-red range and displaced off-axis i.e. not on a diameter of the tube 11 so as to detect the tips of the blades of the turbine section 28 (see Figure 6). The construction of the detection block 12 will be described in detail later but it is of importance to appreciate at this point that the flow measuring section 21 is specially constructed in order to enhance the accuracy of the transducer especially in the presence of fuel vapour or air bubbles in the fuel line. To this end, the exterior of the section 21 has a very slight taper from the locating section 22 towards the groove 24 while the interior bore of the section 21 is parallel sided. The material used to form the section 21, and preferably the whole of the tube 11 is selected such that in the presence of liquid to be measured a pulse signal will be generated by the infra-red sensitive device in accordance with the passage of the blades of the turbine section 28 but in the presence of air or fuel vapour, no signal will be generated even if the turbine section 28 rotates due to the passage of air or vapour. In order to achieve this, the material of the section 21 is chosen primarily to have a refractive index close to or equal to that of the liquid to be measured, a number of different materials can be used such as glass, polycarbonate materials or acrylic resins. In the present case, for petrol or diesel fuel the preferred material is an acrylic resin sold under the trade name TROGAMID-T. Also, the walls of the flow measuring section have to be as optically clear as possible and not be attacked by the liquid to be measured. If desired, the exterior of the tube adjacent the light source can be shaped to present a flat surface normal to the optical aims of the light source.

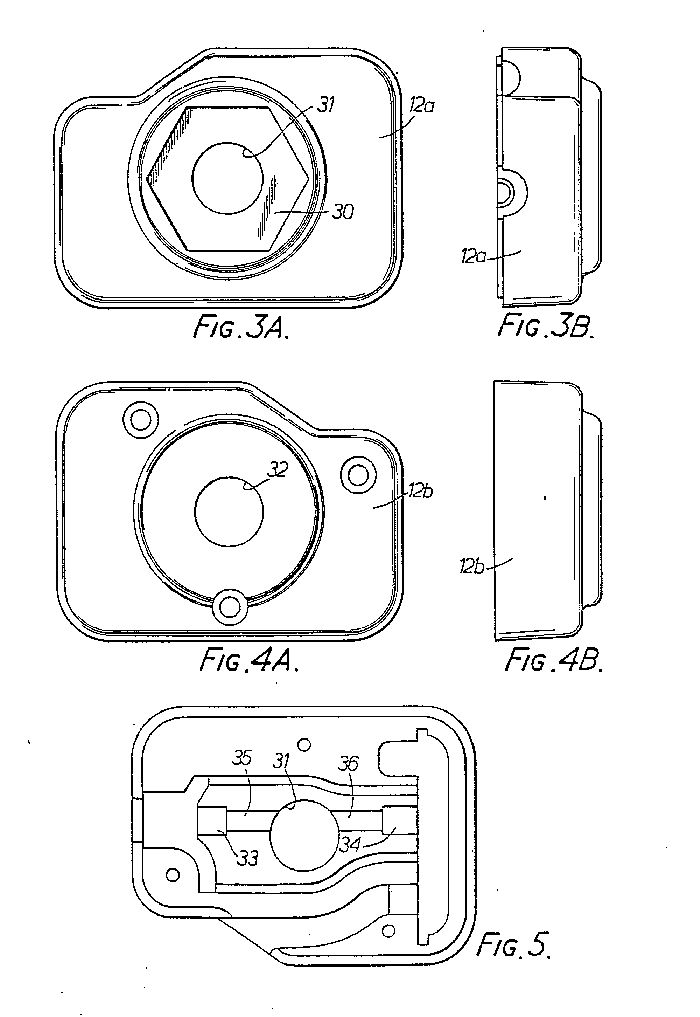

The detection block 12 will now be described in more detail with reference to Figures 3, 4 and 5. The block 12 is made of a plastics material in two mating sections one of which 12a is shown in Figure 3 and the other of which 12b is shown in Figure 4. The section 12a is provided with a recess 30 of hexagonal shape around a hole 31. A corresponding hole 32 is provided in the section 12b. The recess 30 is accurately moulded having regard to the thickness of the locating section 22 of the flow tube 11 so as to accurately locate the flow measuring section 21 of the flow tube 11 within the block 12 with respect to the infra-red source and detector now shown. The two sections having matching internal profiles and hence only that of the section 12a will be described in detail with reference to Figure 5 which shows the hole 31 in the section 12a through which the flow measuring section 21 of the tube 11 passes. Recesses 33 and 34 are arranged to receive the source and detector and are connected to the hole 31 by ducts 35 and 36 respectively, which ducts are in line with each other and act as collimators for the source and detector.

In use, as the turbine rotor member 28 rotates, each blade of the turbine section will interrupt the light beam emitted by the source and received by the detector. Thus, there will be produced a pulse signal indicative of the speed of rotation of the turbine and hence of the flow rate of the liquid passing through the tube 11. Air or fuel vapour bubbles will not be detected by virtue of the optics of the flow measuring section which cause the light beam emitted by the source to be refracted and no signal produced by the detector. Hence any rotation of the turbine section in the presence of an air or fuel vapour bubble will be ignored.

It is preferred to use the flow transducer described above in combination with a computing device in the form of a microprocessor. This combination is particularly useful at low flow rates because the turbine-type flow transducer is nonlinear at low flow rates and if such low flow rates need to be measured the microprocessor can be used to provide correction to linearise the output from the transducer. Preferably, the microprocessor has a number e.g. 5 of pre-programmed steps for linearising the output of the transducer.

The above construction provides a flow transducer which is robust, easy to manufacture and inexpensive. Thus, it is very suitable for use as a fuel flow transducer for an internal combustion engine. However, because of the above features and particularly the fact that it is inexpensive it is an attractive device in other areas where it can be a disposable item thus alleviating the need for cleaning the transducer when used with fluids which might cause the transducer to require cleaning.

The above description has been given on the basis that the material chosen for the tube 11 has a refractive index which is the same as that of the liquid whose flow is to be measured. It will be appreciated that minor variations in refractive indices would cause the beam to be refracted slightly at the liquid/tube interfaces but this can be tolerated and the dispositions of the light source and/or detector adjusted accordingly.

Greater variations in refractive indices require a redesign of the measuring block so that the position and direction of the ducts 35 and 36 can be chosen to allow the light beam to be received when liquid is present in the tube but to inhibit reception of the light beam when air or vapour is present. However, the above described construction provides the simplest design.

A list of suitable types of material has been given previously, to that list should be added nitryl based resins.

## Claims

1. A method of using a turbine-type flow transducer comprising a transparent tube (11) through which liquid to be measured is arranged to pass, a vaned rotor member (28) disposed in the bore of the tube (11) and arranged to rotate at a speed which is a function of the flow rate of the liquid, and a light source (40) and photosensitive device (41) disposed on opposite sides of the tube (11) and positioned with respect to the rotor member (28) such that the vanes of the rotor cyclically vary the intensity of a beam of light passing from the light source (40) to the photosensitivity device (41), characterised by choosing the material of the transparent tube (11) to have a refractive index close to or equal to that of the liquid whose flow is to be measured whereby the beam of light will pass through the transparent tube (11) substantially unrefracted when the liquid is present in the bore of the tube and be detected by the photosensitive device (41).

2. A method according to claim 1, wherein the liquid to be measured is a hydrocarbon fuel and the tube (11) is made of a plastics material.

3. A method according to claim 1 or 2, wherein the light source (40) is a source of infra-red light and the photosensitive device (41) is sensitive to infra-red light.

4. A method according to any one of claims 1 to 3 and comprising a flow straightening device (26, 27) disposed at either end of the rotor member (28) and each provided with a shaft on which the rotor member is arranged to rotate.

5. A method according to claim 4, wherein the flow straightening devices (26, 27) have an equal number of radially extending fins and the rotor member (28) has a number of vanes which is not equal to nor an integer multiple of the number of fins on each flow straightening device (26, 27).

## Patentansprüche

1. Verfahren für die Verwendung eines Strömungsmessers des Turbinentyps, mit einem durchsichtigen Rohr (11) durch welches die zu messende Flüssigkeit hindurchgeleitet wird, einem in der Bohrung des Rohrs angeordneten, mit Flügeln bestückten Rotor (28), welcher mit einer Geschwindigkeit drehbar ist, welche eine Funktion der Strömungsgeschwindigkeit der Flüssigkeit ist, einer Lichtquelle (40) und mit einer lichtempfindlichen Einrichtung (41), welche an einander gegenüberliegenden Seiten des Rohrs (11) angeordnet und in bezug auf den Rotor (28) so ausgerichtet sind, daß die Flügel des Rotors die Intensität eines von der Lichtquelle (40) zur lichtempfindlichen Einrichtung (41) verlaufenden Lichtstrahls zyklisch variieren, dadurch gekennzeichnet, daß man für das durchsichtige Rohr (11) ein Material wählt, dessen Brechungsindex nahezu gleich oder gleich demjenigen der Flüssigkeit ist, deren Strömung gemessen werden soll, wodurch der Lichtstrahl im wesentlichen ungebrochen durch das durchsichtige Rohr (11) hindurchtritt, wenn die Flüssigkeit in der Bohrung des Rohrs vorhanden ist, und von der lichtempfindlichen Einrichtung (41) aufgefangen werden kann.

2. Verfahren nach Anspruch 1, bei welchem die zu messende Flüssigkeit ein Brennstoff auf Kohlenwasserstoffbasis ist und das Rohr (11) aus einem Kunststoff gefertigt ist.

3. Verfahren nach Anspruch 1 oder 2, bei welchem die Lichtquelle (40) eine Quelle für Infrarotlicht ist und die lichtempfindliche Einrichtung (41) infrarotlichtempfindlich ist.

4. Verfahren nach einem der Ansprüche 1 bis 3, mit jeweils einer an jedem Ende des Rotors (28) angeordneten strömungsrichtenden Einrichtung (26, 27), welche jeweils mit einer Welle versehen sind, auf welcher der Rotor drehbar ist.

5. Verfahren nach Anspruch 4, bei welchem die strömungsrichtenden Einrichtungen (26, 27) eine gleiche Anzahl von sich radial erstreckenden Rippen haben und der Rotor (28) eine Anzahl von Flügeln hat, welche der Anzahl der Rippen an jeder der strömungseinrichtungen nicht gleich noch ein ganzzahliges Vielfaches davon ist.

## Revendications

1. Procédé d'utilisation d'un transducteur de débit du type à turbine comprenant un tube transparent (11) dans lequel le liquide à mesurer est destiné à circuler, un rotor (28) muni d'ailettes placé dans le trou du tube (11) et destiné à tourner à une vitesse qui est fonction du débit du liquide, et une source lumineuse (40) et un dispositif photosensible (41) placés de part et d'autre du tube (11) et positionnés par rapport au rotor (28) de manière que les ailettes du rotor fassent varier cycliquement l'intensité d'un faisceau lumineux allant de la source lumineuse (40) au dispositif photosensible (41), caractérisé par la sélection du matériau du tube transparent (11) de manière que son indice de réfraction soit proche de celui du liquide dont le débit doit être mesuré ou égal à cet indice, si bien que le faisceau lumineux traverse le tube transparent (11) pratiquement sans réfraction lorsque le liquide est présent dans le trou du tube, et est détecté par le dispositif photosensible (41).

2. Procédé selon la revendication 1, dans lequel le liquide à mesurer est un carburant hydrocarboné et le tube (11) est formé d'une matière plastique.

3. Procédé selon l'une des revendications 1 et 2, dans lequel la source lumineuse (40) est une source de lumière infrarouge et le dispositif photosensible (41) est sensible à la lumière infrarouge.

4. Procédé selon l'une quelconque des revendications 1 à 3 et comprenant un dispositif de redressement du courant (26, 27) placé à chaque extrémité du rotor (28) et ayant un arbre sur lequel le rotor est destiné à tourner.

5. Procédé selon la revendication 4, dans lequel les dispositifs de redressement de courant (26, 27) ont un même nombre de palettes radiales, et le rotor (28) a un nombre d'ailettes qui n'est égal ni au nombre de palettes de chaque dispositif de redressement du courant (26, 27), ni à un multiple entier de ce nombre de palettes.

FIG.1.

FIG.2A.

FIG.2B.

FIG.2C.

0 039 244

FIG.3A.

FIG.3B.

FIG.4A.

FIG.4B.

FIG.5.

FIG. 6.